# EUROPEAN PATENT APPLICATION

(11) **EP 3 035 763 A1**
(43) Date of publication of application: **22.06.2016**
(21) Application number: 14307025.8
(22) Date of filing: 15.12.2014
(51) Int. Cl.: H04W 74/08, H04W 88/10

(54) **A method for usage of radio resources by different communication standards, and a base station and a user terminal therefor**

(71) Applicant: ALCATEL LUCENT, 92100 Boulogne-Billancourt (FR)
(72) Inventor: Fahldieck, Thorsten, 70435 Stuttgart (DE)
(74) Representative: Kleinbub, Oliver

(57) **Abstract**

The invention concerns a method for usage of radio resources, wherein in a first transmission system using a first communication standard, transmission from a first group of user terminals and a first base station is muted in muting time periods according to a dynamic muting time pattern, in a second transmission system using a second communication standard, said muting time periods are used for transmission from a second group of user terminals or a second base station, in the first transmission system, an end of transmission from the second group of user terminals or the second base station is determined in a muting time period, and in the first transmission system, transmission from the first group of user terminals or the first base station is started after said end of transmission from the second group of user terminals or the second base station, and a base station and a user terminal therefor.

## Description

### Field of the invention

The invention relates to a method for usage of radio resources by transmission systems using different communication standards, and a base station and a user terminal operable to perform said method.

### Background

The allocation of more spectra is one strategy among others to improve the performance of wireless access systems. Beside the licensed spectrum several unlicensed spectrum ranges are available. The additional usage of these spectra offers huge capacity improvements for wireless access networks like LTE (LTE = Long Term Evolution) or successors, as e.g. 5G. The additional usage of unlicensed spectrum provides advantages like a free of charge usage for the operator as well as disadvantages like uncoordinated access from everybody.

Basically two options for the additional usage of unlicensed spectra are feasible. One is the use of the IEEE 802.11 technology, also called WiFi-offload. The wireless access system as well as the wireless terminals are equipped with both technologies LTE, or a successor technology, and WiFi. LTE or a successor technology is used for the licensed spectra, and WiFi, i.e. IEEE 802.11, is used for the unlicensed spectrum. As an alternative approach, LTE or a successor technology can also be used for the unlicensed spectrum also known as LTE-U (LTE-U = LTE for unlicensed bands). LTE-U has some advantages compared to WiFi as better spectral efficiency and improved quality of service mechanisms.

### Summary

However, the use of LTE-U has also some disadvantages which will be described in the following.

In an unlicensed spectrum every wireless network node may access the wireless resources, as e.g. the spectrum, in a random manner. This contradicts the centralized concepts of cellular systems, where a base station has the full control of wireless access in its cell range. If an LTE system would operate in an unlicensed band, it has to coexist with other wireless network nodes which use WiFi technology to get wireless access. Several problems would arise if an unmodified LTE system would operate on an unlicensed band:
- The continuous transmission of an LTE base station would prevent other WiFi user terminals to get access to the wireless resources because the WiFi user terminals use a so-called listen before talk (LBT) mechanism for access.
- WiFi user terminals may send randomly data packets if they detect a free carrier. This leads to interference between the WiFi user terminals and the LTE user terminals and LTE base stations. The performance of both wireless access systems LTE-U and WiFi may be strongly degraded.
- Regulatory authorities in some regions require LBT like mechanisms for the access to unlicensed band. Thus, the operation of an unmodified LTE system in unlicensed bands is not allowed in these regions.

One solution for the above described problems is the partial muting of downlink transmission of an LTE-U base station. The transmission is periodically muted on an LTE-frame basis. With this method the other WiFi user terminals would have a chance to get access on the carrier, but it does not solve the problem of collisions due to the lack of coordinated access or LBT.

It is an object of the invention to overcome the above-identified problems when using LTE-U.

A basic idea of embodiments is the use of an LBT mechanism to avoid the above-identified problems. Instead of a static muting pattern of the LTE frame transmission in LTE-U, the duty cycle is dynamically adapted e.g. based on current traffic conditions. During a muting phase, the LTE-U base station performs carrier sensing on the unlicensed band or bands. If the LTE-U base station detects a WiFi carrier, it delays sending of LTE-U frames until the radio link is clear for transmission. Then the LTE-U base station sends a so-called RTS frame in WiFi mode (RTS = request to send) which includes an appropriate network allocation vector (NAV) to reserve the radio link for transmission of the LTE-U frames. The start of the LTE-U frames transmission may be delayed up to the start of an LTE frame or subframe graticule. The LTE-U base station has to adapt the duty cycle of muting and to adapt the length of the LTE-U frame bursts to provide fairness between the LTE-U user terminals and the WiFi user terminals.

The object of the invention is thus achieved by a method for usage of radio resources by transmission systems using different communication standards, wherein
- in a first transmission system using a first communication standard, transmission from at least one of a first group of user terminals and a first base station is muted in muting time periods according to a dynamic muting time pattern,
- in a second transmission system using a second communication standard, said muting time periods are used for transmission from at least one of a second group of user terminals and a second base station,
- in the first transmission system, an end of transmission from the at least one of the second group of user terminals and the second base station is determined in at least one of said muting time periods,
- and in the first transmission system, transmission from at least one of the first group of user terminals and the first base station is started after said end of transmission from the at least one of the second group of user terminals and the second base station.

The object of the invention is furthermore achieved by a base station for enabling a usage of radio resources by transmission systems using different communication standards, wherein said base station is operable to
- mute transmission in a first transmission system using a first communication standard from at least one of a first group of user terminals and said base station in muting time periods according to a dynamic muting time pattern, said muting time periods being used for transmission from at least one of a second group of user terminals and a second base station in a second transmission system using a second communication standard,
- determine in the first transmission system in at least one of said muting time periods an end of transmission from the at least one of the second group of user terminals and the second base station,
- and start in the first transmission system transmission from at least one of the first group of user terminals and the first base station after said end of transmission from the at least one of the second group of user terminals and the second base station.

The object of the invention is furthermore achieved by a user terminal for enabling a usage of radio resources by transmission systems using different communication standards, wherein said user terminal is operable to
- receive a message from a first base station in a first transmission system using a first communication standard instructing the user terminal to mute transmission in muting time periods according to a dynamic muting time pattern,
- and start transmission in the first transmission system after an end of transmission from at least one of a group of further user terminals and a second base station in a second transmission system using a second communication standard.

In an embodiment of the invention, the first base station sends after said end of transmission from the at least one of the second group of user terminals and the second base station a message to reserve radio resources for transmission from the first group of user terminals and the first base station.

In an embodiment of the invention, a start of said transmission from the first group of user terminals and the first base station is delayed till a start of a frame or subframe in a graticule.

In an embodiment of the invention, said muting time periods and transmission time periods in the first transmission system are dynamically adapted based on traffic conditions in at least one of the first transmission system and the second transmission system.

In an embodiment of the invention, said end of transmission of the at least one of the second group of user terminals and the second base station is determined by power detection on the radio resources by the first base station.

In an embodiment of the invention, said end of transmission of the at least one of the second group of user terminals and the second base station is indicated to the first base station in a message.

In an embodiment of the invention, after said end of transmission from the at least one of the second group of user terminals and the second base station, the first base station sends an allocation message for allocation of the radio resources for a time period.

In an embodiment of the invention, said time period covers a number of frames or subframes.

In an embodiment of the invention, said time period covers said number of frames or subframes and a delay till a start of the first frame or subframe of the number of frames or subframes in a graticule.

In an embodiment of the invention, information about a frame or subframe structure in a graticule is sent from the first base station to the first group of user terminals using further radio resources.

In an embodiment of the invention, the first transmission system uses LTE for unlicensed bands as the first communication standard, and the second transmission system uses WiFi as the second communication standard.

The invention is described in the following within the framework of 3GPP LTE, however as the invention is not restricted to 3GPP LTE or enhancements or successors, as e.g. 5G, thereof, but can in principle be applied in other networks with a potential usage of unlicensed bands, as e.g. in WiMAX networks (WiMAX = Worldwide Interoperability for Microwave Access), in the following, instead of the term eNodeB used in LTE, the more general term base station is used. Furthermore, the term user terminal shall represent all forms of terminal devices, as e.g. smart phones, tablets, or sensors for sensor networks, which might transmit and receive data with or without the interaction of a human being and other fixed installed or mobile communication devices able to transmit and receive data.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station which work according to LTE and LTE-U, and in which the invention can be implemented.
Fig. 3 schematically shows a transmission scheme for WiFi and LTE-U using the same unlicensed band with periodically muted LTE-U transmission on an LTE-frame base.
Fig. 4 schematically shows a transmission scheme for WiFi, LTE-U, and LTE, with WiFi and LTE-U using the same unlicensed band, and with a listen before talk (LBT) mechanism used for access in LTE-U according to an embodiment of the invention.
Fig. 5 schematically shows a sequence chart for allocating radio resources to transmission systems using the different communication standards WiFi and LTE-U according to an embodiment of the invention.

### Description of the embodiments

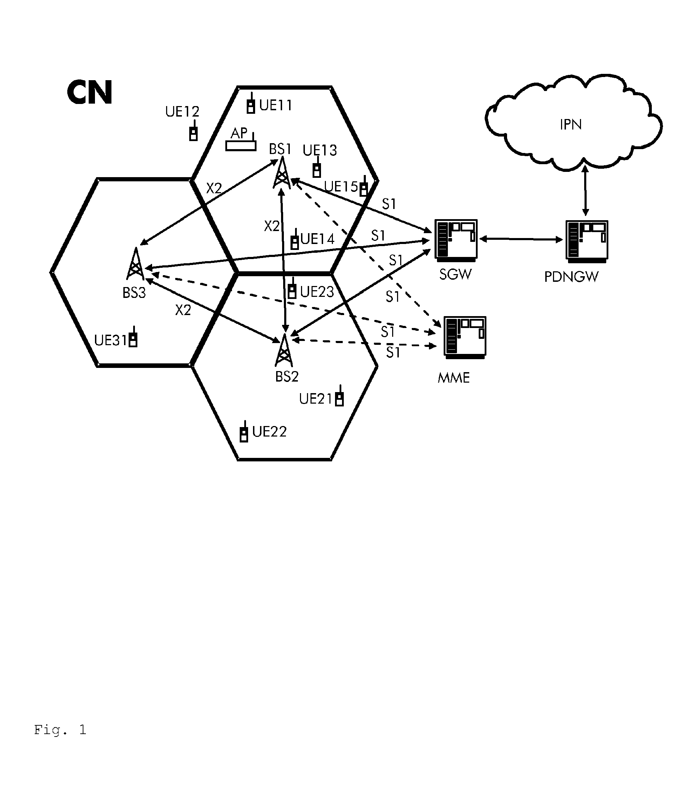

Fig. 1 shows as an example of a communication network in which the invention can be implemented a communication network CN according to the standards 3GPP LTE and WiFi.

Said communication network CN comprises a base station AP and user terminals UE11 and UE12 which work according to WiFi, and thus in unlicensed bands. The base station AP is also called access point in WiFi.

The user terminals UE11 and UE12 are connected via WiFi radio connections to the base station AP. The connection of the base station AP to a core network is not shown in fig. 1 for the sake of simplicity.

Said communication network CN also comprises base stations BS1-BS3, user terminals UE13-UE31, a serving gateway SGW, a packet data network gateway PDNGW, and a mobility management entity MME which work according to LTE and LTE-U, i.e. in licensed and unlicensed LTE bands.

The user terminals UE13-UE15 are connected via LTE-U and LTE radio connections to the base station BS1, the user terminals UE21-UE23 are connected via LTE-U and LTE radio connections to the base station BS2, and the user terminal UE31 is connected via LTE-U and LTE radio connections to the base station BS3. In future evolutions of LTE, each of the user terminals UE13-UE31 can also be connected via radio connections to multiple of said base stations BS1-BS3.

The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between one of the base stations BS1-BS3, i.e. an eNodeB in this example, and the Evolved Packet Core (EPC). The S1 interface has two flavours, S1-MME for exchange of signaling messages between one of the base stations BS1-BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1-BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal and the respective serving base station BS1-BS3.

The mobility management entity MME performs tasks of the subscriber management and the session management, and also performs the mobility management during handover between different access networks.

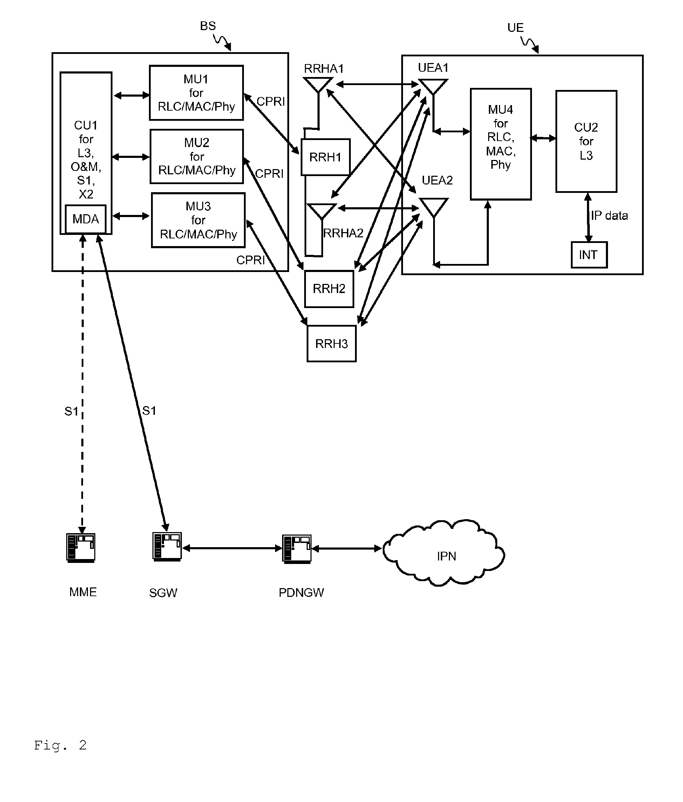

Fig. 2 schematically shows the structure of a user terminal UE and a base station BS which work according to LTE and LTE-U, and in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

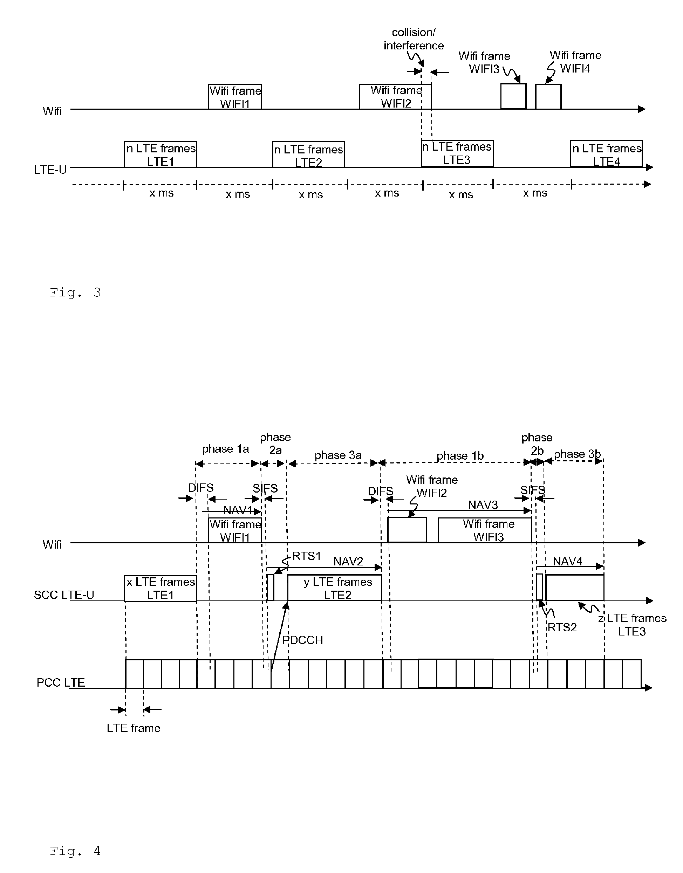

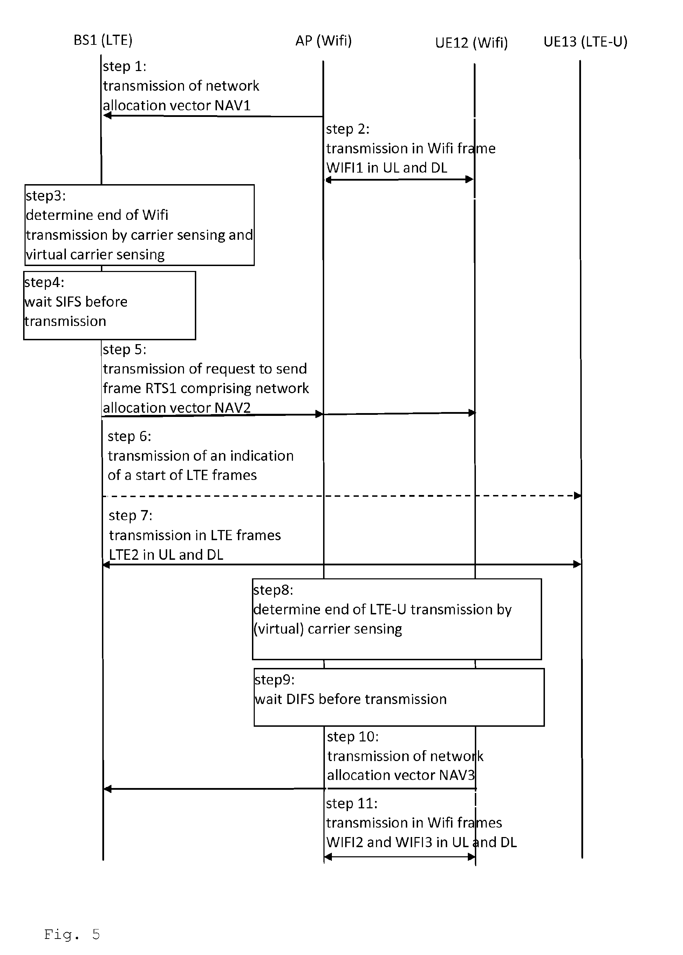

In the sequel, first in fig. 3 and the respective description, a transmission scheme for WiFi and LTE-U with periodically muted LTE-U transmission on an LTE-frame base is disclosed, and then in figs. 4 and 5 and the respective description, a transmission scheme for WiFi, LTE-U, and LTE with a listen before talk (LBT) mechanism used for access in LTE-U, and a sequence chart for allocating radio resources to transmission systems using the different communication standards WiFi and LTE-U by means of said listen before talk (LBT) mechanism are disclosed according to embodiments of the invention.

Fig. 3 schematically shows a transmission scheme for WiFi and LTE-U using the same unlicensed band with periodically muted LTE-U transmission on an LTE-frame base.

In the lower part of fig. 3, a frame structure for the transmission of LTE-U, i.e. for the transmission in an unlicensed LTE band, is shown. A period of n LTE frames corresponding to x ms is shown, with n being e.g. 10, and x being e.g. 100. After each transmission of n LTE frames LTE1, LTE2, LTE3, and LTE4 during x ms, the LTE-U transmission is muted for x ms.

In the upper part of fig. 3, a frame structure for the transmission of WiFi, i.e. for the transmission in an unlicensed WiFi band, is shown. WiFi base stations and user terminals perform carrier sensing to find out if the unlicensed band is not used and can be used for transmission. Thus, a WiFi base station or a WiFi user terminal starts transmitting when the LTE-U transmission is muted, so that all of the WiFi frames WIFI1-WIFI4 begin in a muted LTE-U period. However, it can occur that a transmission of a WiFi frame is not yet finished when the next LTE frames are transmitted. There is e.g. a collision between the WiFi frame WIFI2, and the LTE frames LTE3, as the transmission of WiFi frame WIFI2 is still ongoing when the transmission of the LTE frames LTE3 starts. Such a simultaneous access to the unlicensed band by WiFi and LTE-U should be avoided, as this causes interference.

A simultaneous access to the unlicensed band by WiFi and LTE-U can be avoided by a listen before talk (LBT) mechanism used for access in LTE-U, which will be described in the following.

Fig. 4 schematically shows a transmission scheme for WiFi, LTE-U, and LTE, with WiFi and LTE-U using the same unlicensed band, and with a listen before talk (LBT) mechanism used for access in LTE-U according to an embodiment of the invention.

In the embodiment depicted in fig. 4, it is assumed that LTE-U base stations and LTE-U user terminals support carrier aggregation (CA) with the primary component carriers (PCCs) operating in licensed bands and the secondary component carriers (SCCs) operating in unlicensed bands. Furthermore, it is assumed, that in the unlicensed band LTE-U base stations and LTE-U user terminals are capable to support LTE-U mode operations and Wifi mode operations.

In the upper part of fig. 4, a frame structure for the transmission of WiFi, i.e. for the transmission in an unlicensed WiFi band, is shown.

In the middle part of fig. 4, a frame structure of a secondary component carrier (SCC) for the transmission of LTE-U, i.e. for the transmission in an unlicensed LTE band, is shown. In order to provide fair access to the unlicensed carrier and to avoid collisions, the transmission of LTE-U frames is periodically muted. The duty cycle of muting and transmission is dynamically adapted to the traffic on the radio link.

In the lower part of fig. 4, a frame structure indicating the single LTE frames of a primary component carrier (PCC) for the transmission in a licensed LTE band is shown.

The access of an LTE-U base station to the unlicensed band is performed as follows:

After having requested to send by transmission of a so-called RTS frame in WiFi mode including a network allocation vector (NAV), an LTE-U transmission in uplink and downlink between the LTE-U base station and LTE-U user terminals in the x LTE frames indicated with LTE1 is performed.

When the LTE-U transmission in the LTE frames LTE1 is finished, WiFi devices have to wait for a Distributed coordination function interframe space (DIFS) before the WiFi devices can access the unlicensed band and transmit in the WiFi frame WIFI1.

Then, during phase 1a, the LTE-U base station performs carrier sensing, as the LTE-U base station has decided to send an LTE-U frame burst. The LTE-U base station performs carrier or virtual carrier sensing as defined in a standard according to IEEE 802.11. Carrier sensing means power detection on the radio carriers. If the LTE-U base station detects radio power above a predefined level, it assumes that the particular carrier is in use and defers sending. Virtual carrier sending means that the LTE-U base station has previously received a NAV, as e.g. the network allocation vector NAV1 as depicted in fig. 4, and defers transmission until the network allocation vector NAV1 has expired. When the LTE-U base station treats the carrier as free, it decides to start the sending process.

Then, during phase 2a, the LTE-U base station performs carrier allocation. The LTE-U base station waits for a short interframe space (SIFS) in accordance with an IEEE 802.11 standard after termination of transmission of the WiFi frame WIFI1, or after expiration of the network allocation vector NAV1, and then sends a request to send message RTS1 as defined in an IEEE 802.11 standard. The message RTS1 comprises a network allocation vector NAV2 which allocates the carrier for the transmission period of y LTE-U frames depicted with LTE2 plus an additional delay. This delay may be inserted between the message RTS1 and the start of LTE-U frame burst transmission LTE2. This delay may be necessary, if the end of the Wifi frames transmission doesn't fit with the LTE-U transmission graticule. Depending on the definition of the LTE-U frame protocol, the start of an LTE-U frame transmission has to be synchronous to the LTE-U frame graticule, e.g. LTE frames or subframes, and the frame structure of the primary component carriers (PCCs) in the licensed bands. Thus, in an embodiment of the invention, the start of a new LTE-U frame burst is announced in the control channels, as e.g. the Physical Downlink Control Channel (PDCCH) of the PCC in the licensed band. This announcement signals the start of a new LTE-U frame burst to the LTE-U user terminals in advance.

Then, during phase 3a, an LTE-U transmission in uplink and downlink between the LTE-U base station and LTE-U user terminals in the y LTE frames indicated with LTE2 is performed.

When the LTE-U transmission in the LTE frames LTE2 is finished, WiFi devices have to wait for a distributed coordination function interframe space (DIFS) before the WiFi devices can access the unlicensed band and transmit in the WiFi frames WIFI2 and WIFI3.

Then during phase 1b, which corresponds in principle to phase 1a, the LTE-U base station again performs carrier sensing, as the LTE-U base station has decided to send an LTE-U frame burst. The LTE-U base station performs carrier or virtual carrier sensing. If the LTE-U base station performs carrier sensing and detects radio power above a predefined level, it assumes that the particular carrier is in use and defers sending. If the LTE-U base station performs virtual carrier sensing and has previously received a NAV, as e.g. the network allocation vector NAV3 as depicted in fig. 4, the LTE-U base station defers transmission until the network allocation vector NAV3 has expired. When the LTE-U base station treats the carrier as free, it decides to start the sending process.

Then, during phase 2b, which corresponds in principle to phase 2a, the LTE-U base station performs carrier allocation. The LTE-U waits for a short interframe space (SIFS) after termination of transmission of the WiFi frame WIFI1, or after expiration of the network allocation vector NAV3, and then sends a request to send message RTS2. The message RTS2 comprises a network allocation vector NAV4 which allocates the carrier for the transmission period of z LTE-U frames depicted with LTE3.

Then, during phase 3b, which corresponds in principle to phase 3a, an LTE-U transmission in uplink and downlink between the LTE-U base station and LTE-U user terminals in the z LTE frames indicated with LTE3 is performed.

Fig. 5 schematically shows a sequence chart for allocating radio resources to transmission systems using the different communication standards WiFi and LTE-U according to the embodiment of the invention depicted in fig. 4 for communication between the LTE-U base station BS1 and the LTE-U user terminal UE13, and the WiFi base station AP and the WiFi user terminal UE12, as e.g. depicted in fig. 1.

In step 1, the WiFi base station AP transmits a request to send (RTS) frame including a network allocation vector NAV1 for reserving the unlicensed band for a certain time period. The network allocation vector NAV1 is received by the LTE-U base station BS1.

In step 2, a transmission in the WiFi frame WIFI1 in uplink and downlink is performed.

In step 3, the LTE-U base station BS1 determines an end of the WiFi transmission by carrier or virtual carrier sensing as described above.

In step 4, the LTE-U base station BS1 waits for a short interframe space (SIFS) in accordance with an IEEE 802.11 standard after termination of transmission of the WiFi frame WIFI1, or after expiration of the network allocation vector NAV1, before the LTE-U base station BS1 starts transmission.

In step 5, the LTE-U base station BS1 transmits a request to send frame RTS1 comprising a network allocation vector NAV2 which allocates the unlicensed band for the transmission period of y LTE-U frames depicted with LTE2 in fig. 4 plus an additional delay as described above. The network allocation vector NAV2 is received by the WiFi base station AP and the WiFi user terminal UE12.

In step 6, in an optional step of the embodiment, the start of a new LTE-U frame burst is announced to the LTE-U user terminal UE13 in the control channels, as e.g. the Physical Downlink Control Channel (PDCCH) of the PCC in the licensed band, if the start of an LTE-U frame transmission has to be synchronous to the LTE-U frame graticule, e.g. LTE frames or subframes, and the frame structure of the primary component carriers (PCCs) in the licensed bands.

In step 7, an LTE-U transmission in uplink and downlink between the LTE-U base station BS1 and the LTE-U user terminal UE13 in the y LTE frames indicated with LTE2 in fig. 4 is performed.

In step 8, the WiFi devices, i.e. the WiFi base station AP and the WiFi user terminal UE12, determine an end of the LTE-U transmission by carrier or virtual carrier sensing as described above.

In step 9, the WiFi devices, i.e. the WiFi base station AP and the WiFi user terminal UE12, wait for a distributed coordination function interframe space (DIFS) in accordance with an IEEE 802.11 standard after termination of transmission of the LTE-U frame LTE2, or after expiration of the network allocation vector NAV2, before the WiFi devices can access the unlicensed band and transmit in the WiFi frames WIFI2 and WIFI3 as depicted in fig. 4.

In step 10, the WiFi user terminal UE12 transmits a request to send (RTS) frame including a network allocation vector NAV3 for reserving the unlicensed band for a certain time period. The network allocation vector NAV3 is received by the LTE-U base station BS1.

In step 11, a transmission in the WiFi frames WIFI2 and WIFI3 in uplink and downlink is performed.

In the embodiments described above and depicted e.g. in figs. 4 and 5, the corresponding processing steps can be performed e.g. in the modem unit boards MU1-MU4 and the control unit board CU1, CU2 of the base station BS and the user terminal UE respectively as depicted in fig. 2 and described above.

## Claims

1. A method for usage of radio resources by transmission systems using different communication standards, wherein
• in a first transmission system using a first communication standard, transmission from at least one of a first group of user terminals (UE13) and a first base station (BS1) is muted in muting time periods according to a dynamic muting time pattern,
• in a second transmission system using a second communication standard, said muting time periods are used for transmission from at least one of a second group of user terminals (UE12) and a second base station (AP),
• in the first transmission system, an end of transmission from the at least one of the second group of user terminals (UE12) and the second base station (AP) is determined in at least one of said muting time periods,
• and in the first transmission system, transmission from at least one of the first group of user terminals (UE13) and the first base station (BS1) is started after said end of transmission from the at least one of the second group of user terminals (UE12) and the second base station (AP).

2. A method according to claim 1, wherein the first base station (BS1) sends after said end of transmission from the at least one of the second group of user terminals (UE12) and the second base station (AP) a message to reserve radio resources for transmission from the first group of user terminals (UE13) and the first base station (BS1).

3. A method according to claim 1 or 2, wherein a start of said transmission from the first group of user terminals (UE13) and the first base station (BS1) is delayed till a start of a frame or subframe in a graticule.

4. A method according to any of the preceding claims, wherein said muting time periods and transmission time periods in the first transmission system are dynamically adapted based on traffic conditions in at least one of the first transmission system and the second transmission system.

5. A method according to any of the preceding claims, wherein said end of transmission of the at least one of the second group of user terminals (UE12) and the second base station (AP) is determined by power detection on the radio resources by the first base station (BS1).

6. A method according to any of the claims 1 to 5, wherein said end of transmission of the at least one of the second group of user terminals (UE12) and the second base station (AP) is indicated to the first base station (BS1) in a message.

7. A method according to any of the preceding claims, wherein after said end of transmission from the at least one of the second group of user terminals (UE12) and the second base station (AP), the first base station (BS1) sends an allocation message for allocation of the radio resources for a time period.

8. A method according to claim 7, wherein said time period covers a number of frames or subframes.

9. A method according to claim 8, wherein said time period covers said number of frames or subframes and a delay till a start of the first frame or subframe of the number of frames or subframes in a graticule.

10. A method according to any of the preceding claims,
wherein information about a frame or subframe structure in a graticule is sent from the first base station (BS1) to the first group of user terminals (UE13) using further radio resources.

11. A method according to any of the preceding claims,
wherein the first transmission system uses LTE for unlicensed bands as the first communication standard, and the second transmission system uses WiFi as the second communication standard.

12. A base station (BS1) for enabling a usage of radio resources by transmission systems using different communication standards, wherein said base station (BS1) is operable to
• mute transmission in a first transmission system using a first communication standard from at least one of a first group of user terminals (UE13) and said base station (BS1) in muting time periods according to a dynamic muting time pattern, said muting time periods being used for transmission from at least one of a second group of user terminals (UE12) and a second base station (AP) in a second transmission system using a second communication standard,
• determine in the first transmission system in at least one of said muting time periods an end of transmission from the at least one of the second group of user terminals (UE12) and the second base station (AP),
• and start in the first transmission system transmission from at least one of the first group of user terminals (UE13) and the first base station (BS1) after said end of transmission from the at least one of the second group of user terminals (UE12) and the second base station (AP).

13. A user terminal (UE13) for enabling a usage of radio resources by transmission systems using different communication standards, wherein said user terminal (UE13) is operable to
• receive a message from a first base station (BS1) in a first transmission system using a first communication standard instructing the user terminal (UE13) to mute transmission in muting time periods according to a dynamic muting time pattern,
• and start transmission in the first transmission system after an end of transmission from at least one of a group of further user terminals (UE12) and a second base station (AP) in a second transmission system using a second communication standard.

14. A user terminal (UE13) according to claim 13, wherein said user terminal (UE13) is operable to receive information sent from the first base station (BS1) using further radio resources about a frame or subframe structure in a graticule.
